(19) Europäisches Patentamt
European Patent Office
Office européen des brevets

(11) Publication number: **0 588 442 A1**

(12) **EUROPEAN PATENT APPLICATION**

(21) Application number: **93202983.8**

(51) Int. Cl.5: **C08F 2/06**, C08F 220/18

(22) Date of filing: **01.05.90**

This application was filed on 26 - 10 - 1993 as a divisional application to the application mentioned under INID code 60.

(30) Priority: **15.05.89 US 351896**

(43) Date of publication of application: **23.03.94 Bulletin 94/12**

(60) Publication number of the earlier application in accordance with Art.76 EPC: **0 398 538**

(84) Designated Contracting States: **DE FR GB IT NL**

(71) Applicant: **DOW CORNING CORPORATION**
**3901 S. Saginaw Road**
**Midland Michigan 48686-0994(US)**

(72) Inventor: **Carmody, Walter James**
**264 North Orange Street**
**Port Jervis, New York(US)**
Inventor: **Buzzelli, Anthony John**
**10 Culvert Street**
**Port Jervis, New York(US)**

(74) Representative: **Laredo, Jack Joseph et al**
**Elkington and Fife**
**Prospect House**
**8 Pembroke Road**
**Sevenoaks, Kent TN13 1XR (GB)**

(54) **Method of making hydrophilic-lipophilic copolymeric powders.**

(57) A precipitation polymerization process for producing a macroporous crosslinked copolymeric lattice, capable of adsorbing hydrophilic and lipophilic fluids, in which process there is copolymerized at least one monounsaturated monomer and at least one polyunsaturated monomer in the presence of an organic liquid which is a solvent for the monomers but not for the copolymer, initiating the copolymerization of the monomers by means of a free radical generating catalytic compound, precipitating a copolymer in the solvent in the form of a powder and forming a dry powder by removing the solvent from the precipitated copolymeric powder. One monomer is a hydrophilic compound and the other monomer is a lipophilic compound.

EP 0 588 442 A1

In accordance with the present invention, copolymer powders are produced by novel processes not believed to be taught in the prior art. The prior art, in general, relates to suspension polymerization processes for the production of porous polymeric and copolymeric spheres and beads in which the precipitant is present during polymerization. What has been accomplished in the present invention, however, is a unique concept differing from all of the prior art methods and wherein hydrophilic-lipophilic post adsorbent powders are produced. In contrast to the prior art, the powders of the present invention are capable of adsorbing lipophilic fluids, as well as hydrophilic fluids and liquids having a high surface tension such as water. The powders of the prior art have only been capable of adsorbing low surface tension liquids.

This invention relates to a precipitation polymerization process for producing a macroporous crosslinked copolymeric lattice, capable of adsorbing hydrophilic fluids and lipophilic fluids. In the process, there is copolymerized at least one monounsaturated monomer and at least one polyunsaturated monomer in the presence of an organic liquid which is a solvent for the monomers but not for the copolymer. The copolymerization of the monomers is initiated by means of a free radical generating catalytic compound, precipitating a copolymer in the solvent in the form of a powder. A dry powder is formed by removing the solvent from the precipitated copolymeric powder. One monomer is a hydrophilic compound and the other monomer is a lipophilic compound. The invention also relates to a macroporous crosslinked copolymeric powder produced in accordance with the process.

The monounsaturated monomer can be vinyl pyrrolidone, diacetone acrylamide or 2-phenoxyethyl methacrylate. The polyunsaturated monomer can be ethylene glycol dimethacrylate or tetraethylene glycol dimethacrylate. The solvent is preferably isopropyl alcohol, although ethanol, toluene, heptane and cyclohexane, may also be employed.

The powder which is formed by the process of the present invention is a combined system of particles which can be defined as a lattice; the system of powder particles including unit particles of less than about one micron in average diameter, agglomerates of fused unit particles of sizes in the range of about twenty to eighty microns in average diameter and aggregates of clusters of fused agglomerates of sizes in the range of about two hundred to about twelve hundred microns in average diameter. The monounsaturated monomer and the polyunsaturated monomer can be present in mol ratios of 20:80, 30:70, 40:60 or 50:50. The process may include the step of stirring the monomers, solvent and the free radical generating catalytic compound, during copolymerization. Preferably, the dry powder is formed by filtering excess solvent from the precipitated powder and the filtered powder is vacuum dried. The powder may then be "post adsorbed" with various materials.

The hydrophilic-lipophilic powders of the present invention may be used as carriers or adsorbents for materials such as water, aqueous systems, emollients, moisturizers, fragrances, dyes, pigments, flavors, drugs such as ibuprofen, phosphoric acid, insect repellents, vitamins, sunscreens, detergents, cosmetics, pesticides, pheromones, herbicides, steroids, sweeteners, pharmaceuticals and antimicrobial agents. Finely divided solids such as analgesic materials can be adsorbed by dissolving the finely divided analgesic in a solvent, mixing the analgesic and solvent with the powder and removing the solvent. Other post adsorbable materials include alkanes, alcohols, acid esters, silicones, glycols, organic acids, waxes and alcohol ethers.

These and other objects, features and advantages, of the present invention will become apparent when considered in light of the following detailed description, including the accompanying drawings.

Figure 1 of the drawings is a photomicrograph of the various components of the powder produced in Example I and including unit particles, agglomerates and aggregates.

Figures 2 and 3 are photomicrographs of the agglomerates and aggregates of Figure 1, respectively, shown on a larger scale.

Figure 4 is a photomicrograph of a polymer bead produced by suspension polymerization.

Figure 5 is a photomicrograph of the bead of Figure 4 with a portion of the shell removed to reveal the interior structure of the bead.

Figure 6 is a photomicrograph of a hydrophobic copolymeric powder material. The powder is shown in magnification as it appears when the agitation rate employed in the process for producing the hydrophobic powder is zero rpm.

Figures 7-10 are additional photomicrographs of hydrophobic copolymeric powder materials. The powder is shown in magnification as it appears when the agitation rate employed in the process for producing the hydrophobic powder varies from seventy-five rpm up to eight hundred rpm.

In the above figures in the drawing, the magnification is indicated in each instance. For example, the magnification in Figures 6-9 is 1000X and 2000X in Figure 10. Figures 6-10 also include an insert identifying a length approximating ten microns for comparative purposes.

It should be pointed out, that in viewing the various Figures 6-10, one will note that as the rate of stirring is increased from zero rpm up to eight hundred rpm, that the size of the unit particles increase. This is in direct opposition to what has been traditionally observed in suspension polymerization systems, wherein increases in stirring rates decrease particle size. Because of the increased size of the particulates shown in Figure 10 and the resulting decrease in surface area, the adsorptive capacity of these large particulates is less than the adsorptive capacity of the smaller sized particulates shown in Figures 6-9.

The most effective particulates can be produced if the rate of stirring is maintained below about three hundred rpm, although particulates produced at rates beyond three hundred rpm are useful and adsorptive, but to a lesser extent.

The material of the present invention, can be broadly and generally described as a crosslinked copolymer capable of entrapping solids, liquids and gases. The copolymer is in particulate form and constitutes free flowing discrete solid particles even when loaded with an active material. When loaded, it may contain a predetermined quantity of the active material. The copolymer has the structural formula:

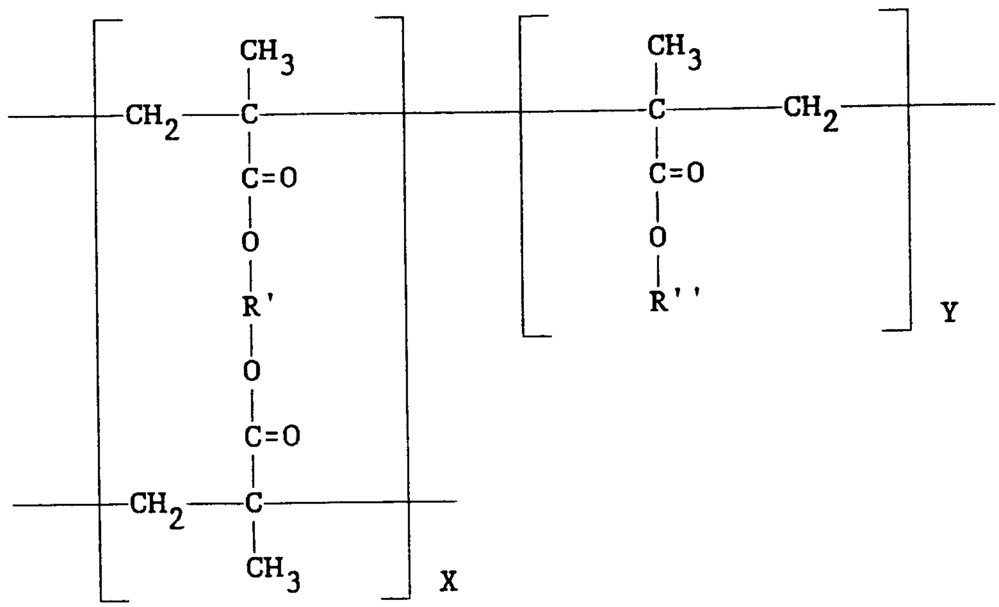

where the ratio of x to y is 80:20, R' is $-CH_2CH_2-$ and R'' is $-(CH_2)_{11}CH_3$.

The copolymer is a highly crosslinked copolymer, as evidenced by the foregoing structural formula and is more particularly a highly crosslinked polymethacrylate copolymer. This material is manufactured by the Dow Corning Corporation, Midland, Michigan, U.S.A. and sold under the trademark POLYTRAP®. It is a low density, highly porous, free-flowing white particulate and the particles are capable of adsorbing high levels of lipophilic liquids and some hydrophilic liquids, while at the same time maintaining a free-flowing particulate character.

In the powder form, the structure of the particulate is complex and consists of unit particles less than one micron in average diameter. The unit particles are fused into agglomerates of twenty to eighty microns in average diameter. These agglomerates are loosely clustered into macro-particles termed aggregates of about 200 to about 1200 microns in average diameter.

Adsorption of actives to form post adsorbent powder, can be accomplished using a stainless steel mixing bowl and a spoon, wherein the active ingredient is added to the empty powder and the spoon is used to gently fold the active into the powder. Low viscosity fluids may be adsorbed by addition of the fluids to a sealable vessel containing the powder and tumbling the materials until a consistency is achieved. More elaborate blending equipment such as ribbon or twin cone blenders can also be employed.

The following example illustrates the method for making a post adsorbent powder, of the type illustrated in Figures 1-3 and 6-10.

Example I

A hydrophobic porous copolymer was produced by the precipitation polymerization technique by mixing in a five hundred milliliter polymerization reactor equipped with a paddle type stirrer, 13.63 grams of

ethylene glycol dimethacrylate monomer or eighty mole percent and 4.37 grams of lauryl methacrylate monomer or twenty mole percent. Isopropyl alcohol was added to the reactor as the solvent in the amount of 282 grams. The monomers were soluble in the solvent, but not the precipitated copolymer. Other solvents that can be employed are ethanol, toluene, cyclohexane or heptane. The mixture including monomers, solvent and 0.36 grams of catalytic initiator benzoyl peroxide, was purged with nitrogen. The system was heated by a water bath to about 60°C. until copolymerization was initiated, at which time, the temperature was increased to about 70-75°C. for six hours, in order to complete the copolymerization. During this time, the copolymer precipitated from the solution. The copolymerization produced unit particles of a diameter less than about one micron. Some of the unit particles adhered together providing agglomerates of the order of magnitude of about twenty to eighty microns in diameter. Some of the agglomerates adhered further and were fused and welded one to another, forming aggregates of loosely held assemblies of agglomerates of the order of magnitude of about two to eight hundred microns in diameter. The mixture was filtered to remove excess solvent and a wet powder cake was tray dried in a vacuum oven. A dry hydrophobic copolymeric powder consisting of unit particles, agglomerates and aggregates was isolated. Powders can also be produced using other monomers of the type disclosed in U.S. Patent No. 4,724,240.

The adsorptive capacity of the hydrophobic particulates produced in Example I, as a function of the stirring rate, was determined. The stirring rate during the reaction in Example I significantly influences the adsorption properties of the particulate materials. The adsorptivity of the particulate materials decreases with an increase in stirring rate and the density of the particulates increases. These results are tabulated and set forth in Tables I-III.

TABLE I

| Agitation Rate (RPM) | Bulk Density Size (g/cc) | Average Aggregate Size (μ) | Average Agglomerate Size (μ) | Average Unit Particle (μ) | Adsorption Capacity* |
|---|---|---|---|---|---|
| 0 | 0.067 | 182.5 | 33.9 | 1.0 | 83.0 |
| 75 | 0.077 | 140.6 | 36.6 | 0.5 | 84.8 |
| 150 | 0.071 | 149.8 | 39.8 | 0.8 | 83.0 |
| 300 | 0.293 | 47.0 | 34.0 | 1.5-2.0 | 58.3 |
| 800 | 0.440 | -- | 10.0 | 3.0-5.0 | 37.7 |

* = Percent Silicone Oil

TABLE II

| Stirring Speed RPM | Adsorption Capacity % | | | |
|---|---|---|---|---|
| | Water | Mineral Oil | Glycerine | Organic Ester* |
| 0 | 0 | 80 | 75 | 80 |
| 75 | 0 | 83.9 | 75 | 81.5 |
| 150 | 0 | 80 | 75 | 80 |
| 300 | 0 | 54.5 | 58.3 | 54.5 |

* = 2-ethylhexyl-oxystearate

## TABLE III

| RPM | Adsorption Capacity % | | | Density (g/cm$^3$) | |
|---|---|---|---|---|---|
| | Mineral Oil | 2-ethylhexyl oxystearate | Silicone Oil | Bulk | Tapped |
| 0 | 82.5 | 82.5 | 86.5 | 0.0368 | 0.0580 |
| 75 | 82.3 | 82.2 | 86.5 | 0.0462 | 0.0667 |
| 150 | 82.3 | 82.3 | 86.3 | 0.0527 | 0.0737 |
| 200 | 81.5 | 81.5 | 85.7 | 0.0554 | 0.0752 |
| 250 | 79.2 | 80.0 | 84.8 | 0.0636 | 0.0859 |
| 300 | 68.8 | 68.8 | 75.0 | 0.1300 | 0.1768 |
| 450 | 58.3 | 58.3 | 61.5 | 0.1736 | 0.2392 |
| 600 | 54.5 | 54.5 | 60 | 0.1933 | 0.2792 |
| 700 | 42.2 | 42.5 | 45.7 | 0.2778 | 0.4142 |
| 800 | 33.3 | 28.6 | 33.3 | 0.3862 | 0.5322 |
| 1000 | 32.8 | 28.5 | 32.9 | 0.3808 | 0.5261 |

In the foregoing tables, it can be seen that adsorption and density, as a function of stirring rate, was determined for a silicone oil, water, mineral oil, glycerine and an organic ester. From zero rpm up to about 250 rpm, the adsorptivity of the porous copolymeric powder particulates of Example I remained essentially consistent. However, at about three hundred rpm, there was a substantial decrease in adsorptivity, which decrease became more apparent as the stirring rate was increased up to about one thousand rpm. A similar pattern is evidenced by the data which are reflective of the density.

This phenomenon is more apparent in the photomicrographic figures of the drawing. Thus, it can be seen from Figure 6, that the particle size of the particulates increases as the stirring rate is increased, as

evidenced by Figure 10. A progression in this phenomenon can be observed in Figures 7-9.

While the procedure of Example I is a precipitation polymerization process and not a suspension polymerization system, the prior art dealing with suspension polymerization teaches that an increase in stirring rate causes a decrease in particle size. This is documented, for example, in U.S. Patent No. 4,224,415, issued September 23, 1980, and in the PCT International Publication No. WO-88/01164, published on February 25, 1988. The PCT International Publication employs stirring rates upwards of nine hundred to twelve hundred rpm. In Example I above, however, increases in stirring rates not only did not decrease the particle size, but in fact had exactly the opposite effect, causing the unit particle size to increase. As the rate of stirring is increased from zero rpm up to one thousand, the density of the particulate increases and the adsorptive capacity of the particulate decreases.

In accordance with the above, it should be apparent that it is possible to tailor porous particulates of a particular size and adsorptivity by means of stirring rate. Thus, with large unit particles in Figure 10, the adsorptive capacity is less than the adsorptive capacity of smaller sized unit particles in Figures 6-9. While the most effective particulates are produced when the rate of stirring is maintained below about three hundred rpm, particulates produced at rates beyond three hundred rpm are useful.

It is important to understand that the method of Example I for the production of hydrophobic porous copolymeric particulate powder materials is characterized as a precipitation polymerization technique. In accordance with this technique, monomers are dissolved in a compatible volatile solvent in which both monomers are soluble. Polymer in the form of a powder is precipitated and the polymer is insoluble in the solvent. No surfactant or dispersing aid is required. The materials produced are powders and not spheres or beads. The powder particulates include unit particles, agglomerates and aggregates. The volatile solvent is subsequently removed resulting in a dry powder particulate, which can be post adsorbed with a variety of other types of functional active ingredients. The suspension polymerization process on the other hand, provides that polymerization be carried out in water and in some cases chloroform or chlorinated solvents. The monomers, the active, and the catalyst, form beads or droplets in water and polymerization occurs within each bead. A surfactant or stabilizer such as polyvinyl pyrrolidone is required in order to prevent the individually formed beads and droplets from coalescing. The resulting beads, with the active material entrapped therein, include a substantially spherical outer crust or shell, the interior of which contains a macroporous structure of fused unit particles, agglomerates and aggregates. The bead is ten microns in diameter to one hundred-fifty microns, depending upon the rate of agitation employed during the process. Such beads are shown in Figures 4 and 5.

Some unique features of the powders of Figures 1-3 and 6-10 are their ability to adsorb from sixty to eighty percent of a liquid and yet remain free flowing. The materials provide a regulated release of volatile ingredients such as cyclomethicone entrapped therein and have the capability of functioning as carriers for other non-volatile oils. Loaded powders disappear when rubbed upon a surface. This phenomenon is believed due to the fact that large aggregates of the material scatter light rendering the appearance of a white particulate, however, upon rubbing, these large aggregates decrease in size approaching the range of visible light and hence seem to disappear. The materials find applications in such diverse areas as cosmetics and toiletries, household and industrial products, pesticides, pheromone carriers and pharmaceuticals. The materials do not swell in common solvents and are capable of physically adsorbing active ingredients by the filling of interstitial voids by capillary action. The active ingredients are subsequently released by capillary action or wicking from the voids within the particulates.

In Examples II-IV, the hydrophobic powder material produced in Example I, was surface treated in order to render the hydrophobic powder hydrophilic. A first method is shown in Example II. A second method is set forth in Example III. Example IV describes an additional step that is included in the method of Example III. References to hydrophobic powder in Examples II-IV refers to the powder material produced in accordance with Example I.

Example II

5.0 grams of hydrophobic powder was refluxed and stirred with 10.0 grams of NaOH, 150 cc of butyl alcohol and 15 cc of water. After reflux for 4.5 hours, the product was filtered and washed four times with 100 cc of 1:1 isopropyl alcohol and water, once with butyl alcohol and once again with isopropyl alcohol. The powder was vacuum dried to constant weight. Scanning electron microscopic photomicrographs of the treated powder showed no visible change in aggregate structure compared to untreated powder. Electron spectroscopic analysis showed 6 atom % Na at the surface of the powder. Attenuated total reflectance infrared radiation analysis indicated the presence of carboxylate ion (1590 cm-1) in the treated powder.

The treated powder was easily wetted by water and produced a viscous paste upon minimal mixing. By comparison, untreated powder was completely non-wetted by water.

Example III

2.5 grams of methacrylic acid was added to 25.0 grams of hydrophobic powder that had been suspended in a mixture of 100 cc toluene, 400 cc heptane and 0.275 grams 1,1'-azobiscyclohexanecarbonitrile. The mixture was flushed with $N_2$ and heated at reflux (104° C.) for 4 hours. The product was filtered, washed with isopropyl alcohol and dried under vacuum to a constant weight.

Scanning electron microscopic photomicrographs of the powder showed no apparent change in aggregate structure. Electron spectroscopic analysis showed an enrichment of oxygen (26.4 atom % 0) at the surface of the powder compared to untreated powder (20.0 atom % O). The product was wettable by water.

Example IV

5.0 grams of product from Example III was mixed with 2.0 grams NaOH dissolved in a mixture of 200 cc isopropyl alcohol and 50 cc water. The mixture was stirred for 10 minutes at 65° C. The powder was recovered by filtration, washed twice with 300 cc 1:1 isopropyl alcohol $H_2O$ and dried under vacuum to a constant weight. Electron spectroscopic analysis showed the presence of 3.4 atom % Na on the surface of the powder. The powder was highly adsorbent toward water.

Test data showing the hydrophilic nature of the materials produced by the methods of Examples II-IV are set forth in Table IV. It should be apparent from Table IV that the powder materials produced by both the method of Example II and the method of Examples III-IV are capable of adsorbing water, in contrast to the hydrophobic powder of Example I. In fact, Table II shows that the hydrophobic powders produced by Example I did not adsorb water to any extent.

In Example II, the copolymeric lattice was saponified by reacting the surface with an aqueous alkali, rendering the hydrophobic nature of the surface after saponification to be hydrophilic. Potassium hydroxide and quaternary ammonium hydroxides may also be employed. In Example III, alteration of the surface characteristics of the copolymeric lattice was achieved by polymerizing an acrylate monomer on the surface of the hydrophobic lattice in order to form hydrophilic carboxylic acid sites thereon. Other suitable monomers are acrylic acid, hydroxyethylacrylate and acrylamide. The carboxylic acid sites may be converted to more hydrophilic carboxylate anions in Example IV by reacting the surface containing the carboxylic acid sites with aqueous alkali.

Free flowing adsorption capacity was determined by addition of incremental amounts of liquid to a known amount of powder, using gentle mixing, until the powder was no longer free flowing. The capacity was expressed as:

$$\frac{\text{(wt. Powder + Liquid) - (Initial wt. of Powder)}}{\text{(wt. Powder + Liquid)}} \quad X \quad 100$$

TABLE IV

| Sample | Free Flow Capacity (%) | | | |
|---|---|---|---|---|
| | $H_2O$ | Mineral Oil | Ester* | Silicone** |
| Untreated Powder Control of Example I | 0 | 77.3 | 78.3 | 78.3 |
| Powder of Example II Saponified With NaOH | 69.8 | 50.4 | 51.2 | 56.0 |
| Powder of Example III | 74.5 | 75.6 | 72.3 | 76.9 |
| Powder of Example IV | 73.0 | 72.3 | 73.0 | 76.2 |

* 2-ethylhexyl oxstearate
** Octamethylcyclotetrasiloxane

Example V

Example I was repeated, except that different monomer systems were employed and at varying mol ratios of the monomers. The copolymeric powders produced were tested for their adsorptive capacity for various lipophilic fluids and for water. The monomer pairs employed, the mol ratios and the adsorption data generated for each monomer pair, are shown in Table V. It will be noted that the powders produced from the monomer pairs of Example V not only were capable of adsorbing substantial quantities of lipophilic fluids, but that water was capable of being adsorbed. This is in contrast to Example I and Table II where no water was adsorbed.

Example V sets forth the concept of the present invention and provides hydrophilic-lipophilic copolymeric powders capable of adsorbing water and lipophilic fluids. By a selection of monomers, there can be produced powder materials possessing more versatility than the hydrophobic lattices of Example I. In addition, the method of Example V is a viable alternative to the surface treatment methods of Examples II-IV and provides powder materials of substantially equivalent utility.

TABLE V

| Monomers | Mole Ratio | Absorption Per Cent: 2-Ethylhexyl Oxystearate | Mineral Oil | Glycerine | Water |
|---|---|---|---|---|---|
| Vinyl pyrrolidone* / Ethylene glycol dimethacrylate** | 20/80 | 77 | 74 | 80 | 70 |
| Diacetone acrylamide* / Ethylene glycol dimethacrylate** | 20/80 | 68 | 75 | 73 | 75 |
| Diacetone acrylamide* / Ethylene glycol dimethacrylate** | 30/70 | 68 | 66 | 73 | 72 |
| 2 Phenoxyethyl methacrylate** / Tetraethylene glycol dimethacrylate* | 40/60 | 68 | 64 | 72 | 68 |
| 2 Phenoxyethyl methacrylate** / Tetraethylene glycol dimethyacrylate* | 50/50 | 60 | 60 | 70 | 70 |

* = Hydrophilic

** = Lipophilic

The water adsorbing porous polymeric materials of Example V are to be contrasted with the water containing beads of U.S. Patent No. 3,627,708, issued December 14, 1971. The bead of the '708 patent is produced by "in situ" suspension polymerization and is adapted to contain water only because of the presence of a solubilizer such as sodium bis(2-ethyl hexyl) sulfosuccinate. The material of the present invention, on the other hand, is produced by a precipitation polymerization process, which contains no solubilizer and produces a material in the form of a hydrophilic-lipophilic powder consisting of unit particles,

agglomerates and aggregates. Thus, the materials of the present invention are very distinct from the materials of the '708 patent. The materials of the present invention are of general utility and may be used for the adsorption of lipophilic fluids and hydrophilic fluids.

It will be apparent from the foregoing that many other variations and modifications may be made in the structures, compounds, compositions and methods described herein without departing substantially from the essential features and concepts of the present invention. Accordingly, it should be clearly understood that the forms of the invention described herein are exemplary only and are not intended as limitations on the scope of the present invention.

## Claims

**1.** A precipitation polymerization process for producing a hydrophobic, macroporous crosslinked copolymer powder, comprising copolymerizing lauryl methacrylate and ethylene glycol dimethacrylate in the presence of an organic liquid which is a solvent for the monomers, but not for the copolymer, initiating the copolymerization of the monomers by means of a free radical generating catalytic compound, precipitating a copolymer in the organic liquid in the form of a powder and forming a dry, hydrophobic powder by removing the organic liquid from the precipitated copolymer powder.

**2.** The precipitation polymerization process of Claim 1, wherein the copolymer powder includes unit particles, agglomerates and aggregates.

**3.** The precipitation polymerization process of Claim 1, wherein the solvent is selected from isopropyl alcohol, ethanol, toluene, heptane and cyclohexane.

**4.** The precipitation polymerisation process of any of Claims 1 to 3, wherein the hydrophobic, macroporous crosslinked copolymer powder is further treated to render the surface of said powder hydrophilic by saponification of the surface with alkali hydroxide.

**5.** The precipitation polymerization process of Claim 4, wherein the alkali hydroxide is selected from sodium hydroxide, potassium hydroxide and quaternary ammonium hydroxide.

**6.** The precipitation polymerization process of any of Claims 1 to 3, wherein the hydrophobic macroporous crosslinked copolymer powder is further treated to render the surface of the powder hydrophilic by polymerizing acrylate monomers onto the surface of the powder to form hydrophilic carboxylic acid sites on said surface.

**7.** The precipitation polymerization process of Claim 6, wherein the acrylate monomers are selected from acrylic acids, hydroxyethylacrylates and acrylamides.

**8.** The precipitation polymerization process of Claim 6, wherein the hydrophobic, macroporous crosslinked copolymer is further treated with aqueous alkili to further increase the hydrophilic carboxylic acid sites on the surface of the powder.

FIG. 1

1500 X

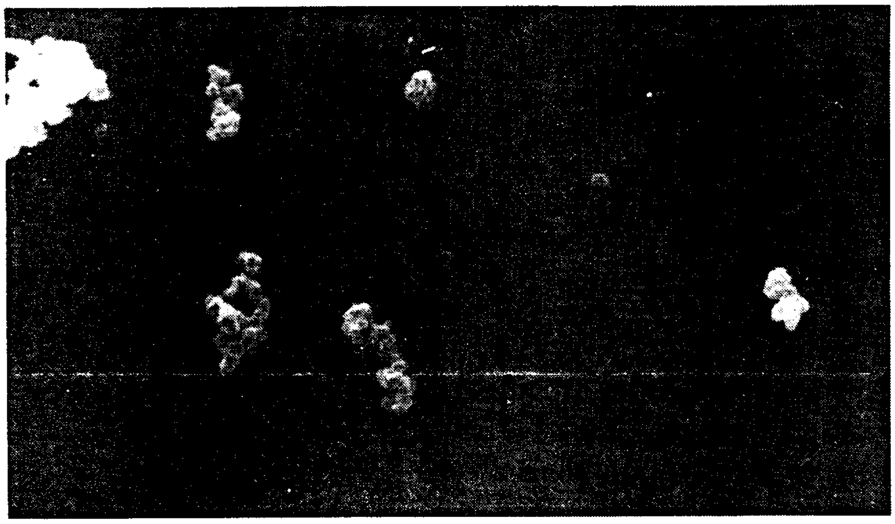

FIG. 2

10000 X

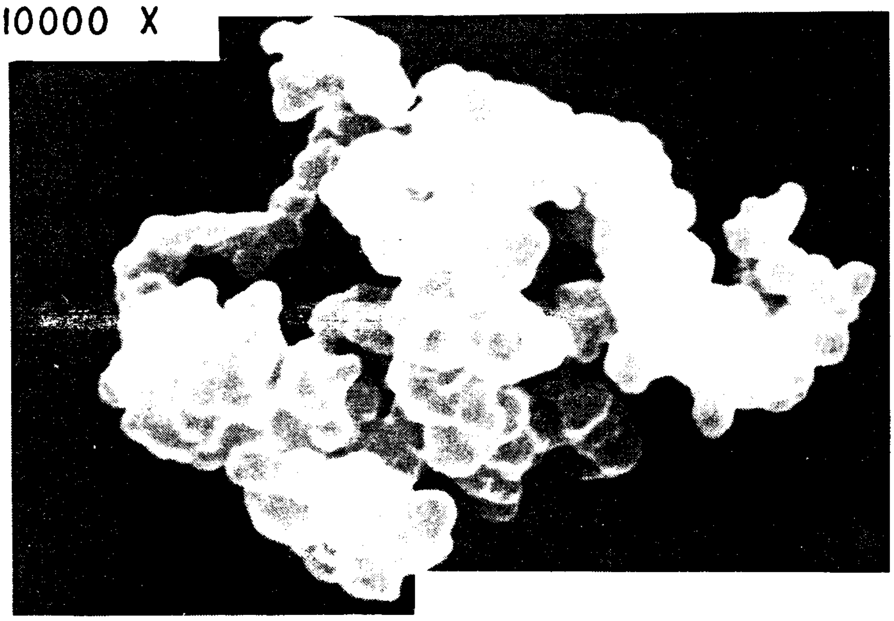

FIG. 3

2000 X

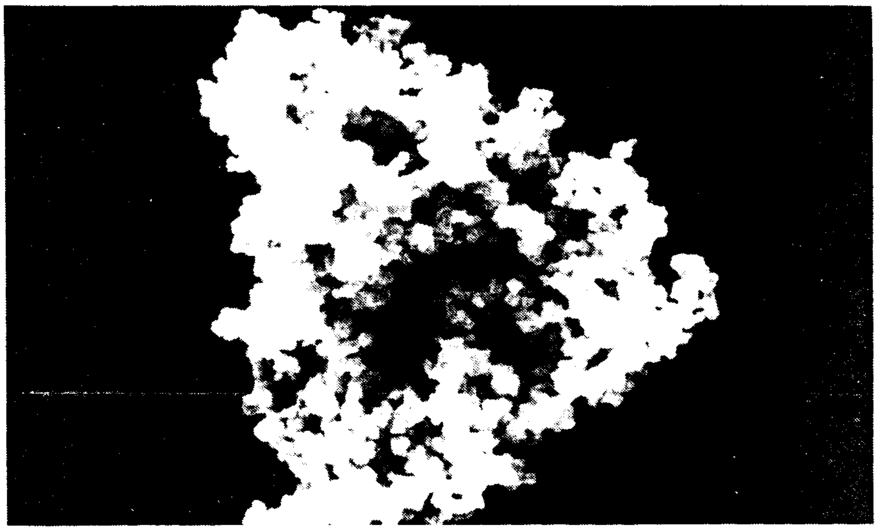

FIG. 4

1500 X

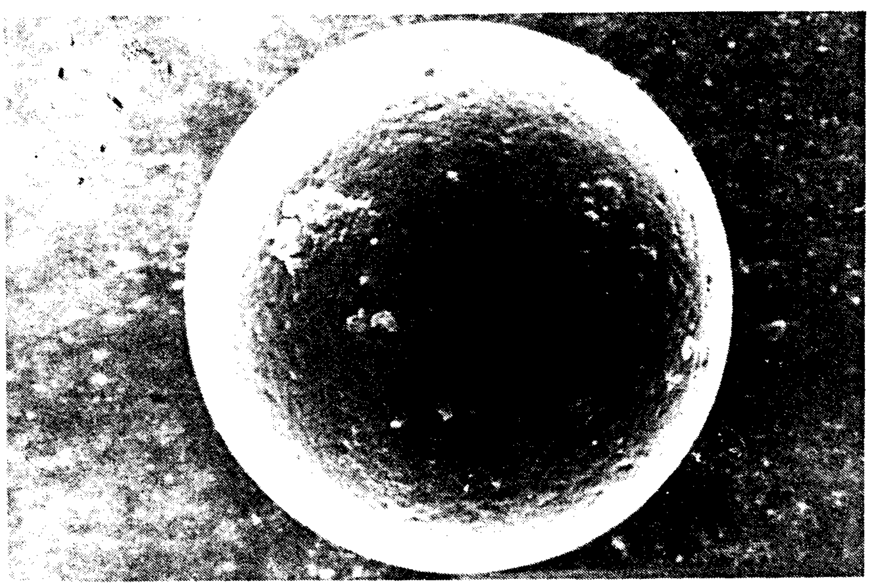

FIG. 5

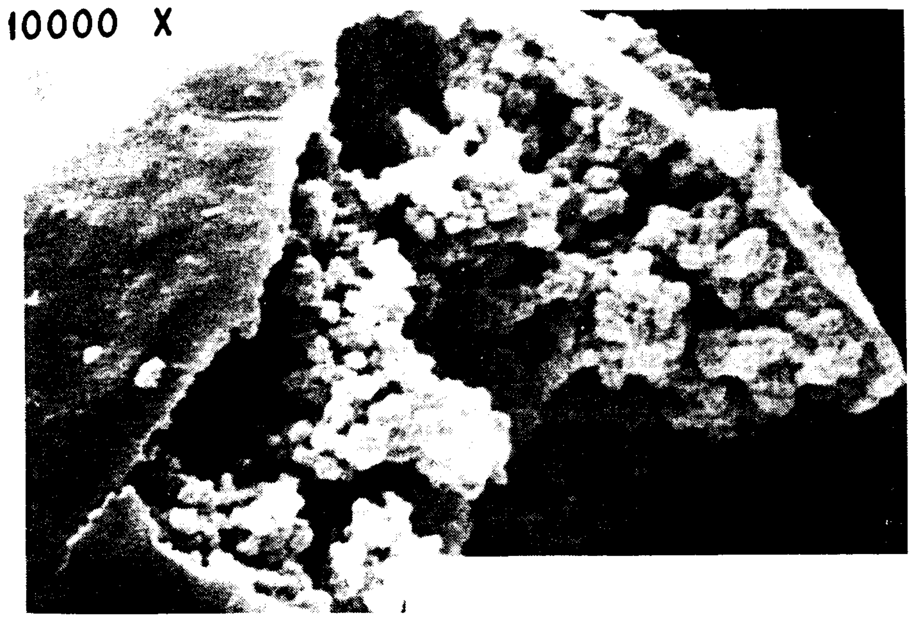

FIG.6

1000 X

0 RPM

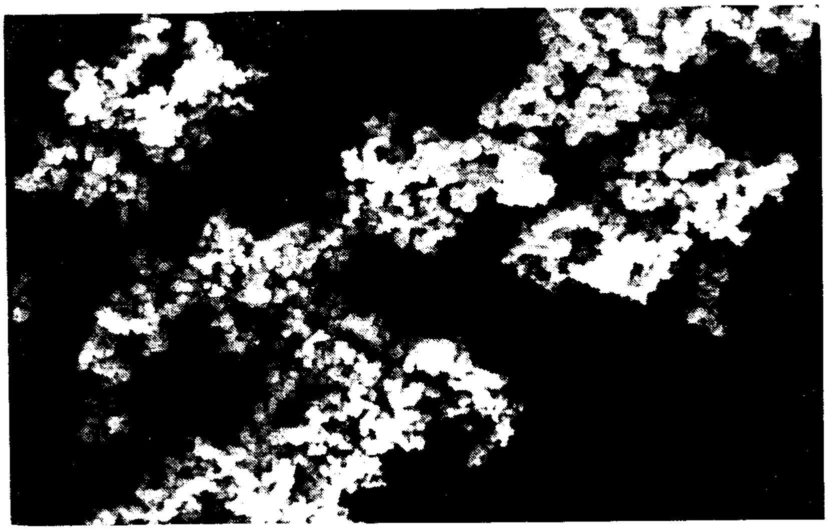

10 μm

FIG.7

1000 X

75 RPM

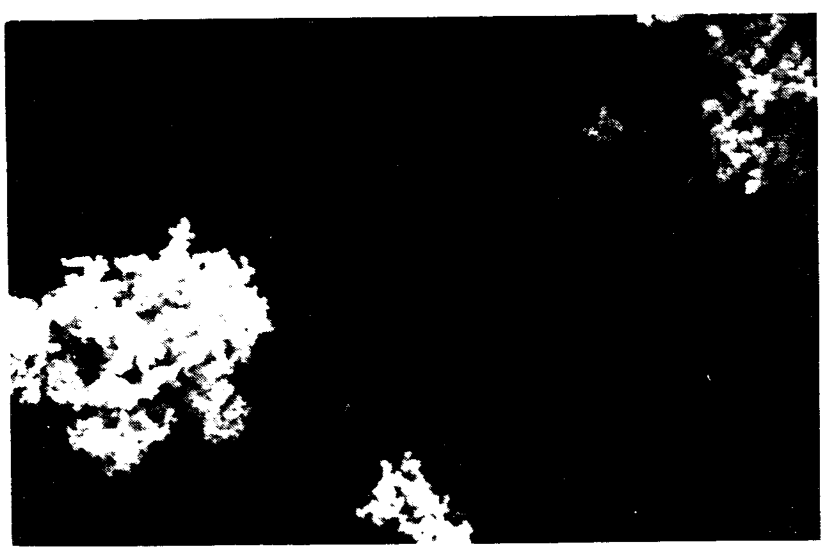

10 μm

FIG.8

1000 X

150 RPM

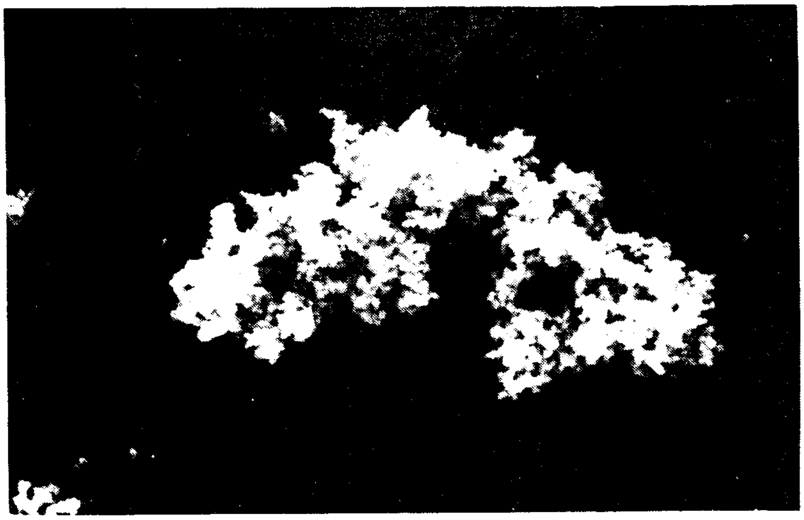

10 µm

FIG.9

1000 X

300 RPM

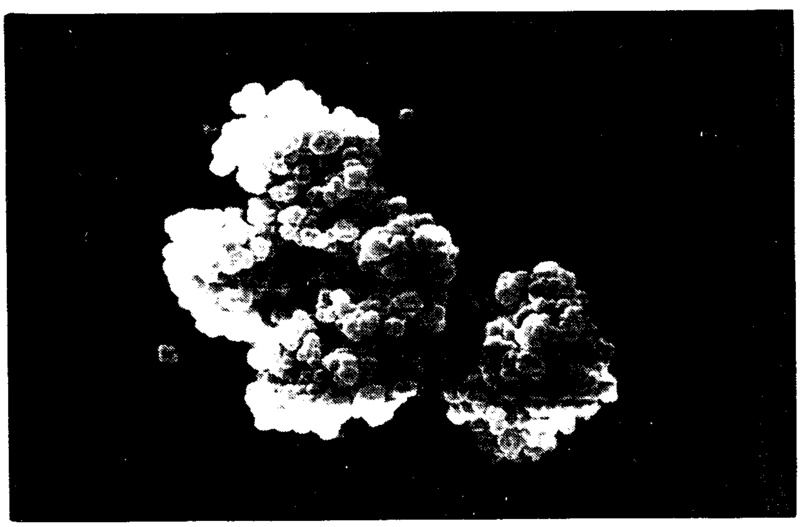

10 µm

FIG. 10

2000 X

800 RPM

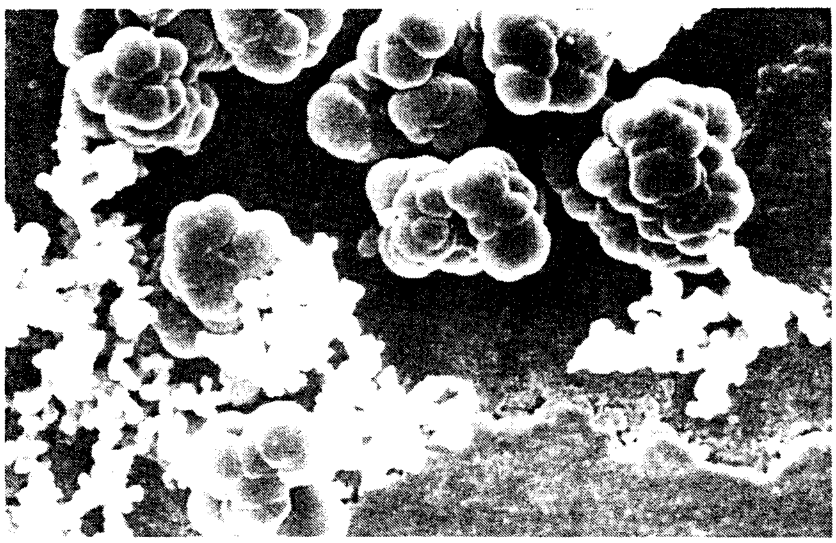

10 μm

European Patent Office

# EUROPEAN SEARCH REPORT

Application Number
EP 93 20 2983

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-E-27 026 (TURNER ALFREY)<br>* claim 1 *<br>--- | 1 | C08F2/06<br>C08F220/18 |
| X | FR-A-1 566 430 (CESKOSLOVENSKA AKADEMIE VED)<br>* claims 1,2 *<br>--- | 1 | |
| X | CHEMICAL ABSTRACTS, vol. 95, no. 22, 30 November 1981, Columbus, Ohio, US;<br>abstract no. 188086, 'NONAQUEOUS EMULSIONS OF ACRYLIC POLYMERS'<br>page 32 ;column 1 ;<br>* abstract *<br>& JP-A-8 179 111 (RICOH CO. LTD.)<br>----- | 1 | |

| TECHNICAL FIELDS SEARCHED (Int.Cl.5) |
|---|
| C08F |

The present search report has been drawn up for all claims

| Place of search | Date of completion of the search | Examiner |
|---|---|---|
| THE HAGUE | 3 January 1994 | Cauwenberg, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document